# EUROPEAN PATENT SPECIFICATION

(11) **EP 1 027 703 B1**
(45) Date of publication and mention of the grant of the patent: **13.03.2002**
(21) Application number: 98951659.6
(22) Date of filing: 05.11.1998
(51) Int. Cl.: G11B 7/26, G11B 7/24

(54) **A METHOD FOR MANUFACTURING AN OPTICAL MEMORY DEVICE AND FLUORESCENT COMPOSITION**
VERFAHREN ZUR HESTELLUNG EINER OPTISCHEN SPEICHERVORRICHTUNG FLUORESZIERENDE ZUSAMMENSETZUNG
PROCEDE DE FABRICATION DE DISPOSITIFS A MEMOIRES OPTIQUES ET COMPOSITION FLUORESCENTE

(30) Priority: 05.11.1997 US 64300 P
(43) Date of publication of application: 16.08.2000
(73) Proprietor: OMD Devices LLC, Wilmington, New Castle DE 19805 (US)
(72) Inventor: KIRYUSCHEV, Irina, 69341 Tel Aviv (IL); GLUSHKO, Boris, 77516 Ashdod (IL)
(74) Representative: Thomson, Paul Anthony
(86) International application number: IL9800536
(87) International publication number: WO9923652

(56) References cited:
- EP-A- 0 460 347
- PATENT ABSTRACTS OF JAPAN vol. 096, no. 002, 29 February 1996 & JP 07 282466 A (FURUKAWA ELECTRIC CO LTD:THE), 27 October 1995

## Description

### FIELD OF THE INVENTION

This invention is in the field of optical memory devices, in particular it relates to a method for manufacturing a 3-dimensional read only memory (ROM) device.

### BACKGROUND OF THE INVENTION

Compact discs are known optical memory devices, which are widely used particularly with playback and computer devices for retrieving musical and software compositions. Such devices typically comprise only one information-carrying layer and, therefore, suffer from a limited amount of recorded data.

Three-dimensional optical memory devices have been developed typically comprising a plurality of parallel, spaced-apart layers having information carrying regions in which optical properties differ from those of adjacent regions of the layers. One example of such a device is disclosed in U.S. Patent No. 4,090,031. The device comprises a substrate and a plurality of data layers provided on one side of the substrate. Each of the layers comprises data tracks formed of lines of data spots. The data spots are, in turn, formed of either binary coded digital information or frequency or pulse length modulated analog information, which is photographically recorded. The data spots are light reflective. Selection of one data track for playback is accomplished by changing the focus of a reading light beam from one data layer to another, or by making the data tracks of materials having different optical properties, the reading light being of different wavelengths for different layers. To this end, different color dyes or different photoluminescent materials are used and corresponding color filters are selectively positioned in front of light detectors.

The device described in the above patent is manufactured in the following manner. The data layers are made of photosensitive, reflective material such as photographic film or another suitable recording material including printing ink. The data spots are formed of light reflecting metal material having a reflecting index different from that of the data layers. The data spots are fabricated by either vapor deposition through a mask having an aperture corresponding to the data spots, or etching through a photoresist mask. It is thus evident that such a device suffers from multiple over-reflection when retrieving the information from the layers. Indeed, a reading beam would pass through all the layers, where each layer is reflective. This results in the number of layers being limited to two. For example the known DVD.

### SUMMARY OF THE INVENTION

It is the object of the present invention to provide a novel method for manufacturing a three-dimensional read only memory (ROM), having a plurality of spaced-apart data regions made of a composition containing fluorescent material and surrounded by regions made of substantially non-fluorescent material.

Thus the present invention provides a method of making a three-dimensional read only memory (ROM), having at least two information layers consisting of a plurality of spaced-apart data regions capable of generating an output radiation upon excitation by a predetermined incident exciting radiation, the method comprising a sequence of steps which include
(a) providing a working layer made of a fluorescent composition containing a photosensitive material and a fluorescent material;
(b) subjecting said working layer to photolithographic processing to produce said information layer including data regions formed of said fluorescent composition;
(c) coating the information layer by a non-fluorescent, intermediate layer; and
(d) repeating the sequence steps (a) to (c) a desired number of times to provide a corresponding additional number of information layers with data regions.

The invention further provides a composition for use in the above method of making a three-dimensional ROM, comprising a fluorescent material dispersed in a photosensitive material. Optionally the said composition may also include a material to be referred to herein a "host material", which is capable of interacting with fluorescent material to provide an efficient conversion of absorbed radiation into fluorescence. Also optionally the said composition may include a solvent.

Preferably, the fluorescent materials used according to the present invention absorb within the range of about 500 nm to about 850 nm.

The preferred optional solvent depends on the solubility of the fluorescent materials and photosensitive materials used.

### BRIEF DESCRIPTION OF THE DRAWINGS

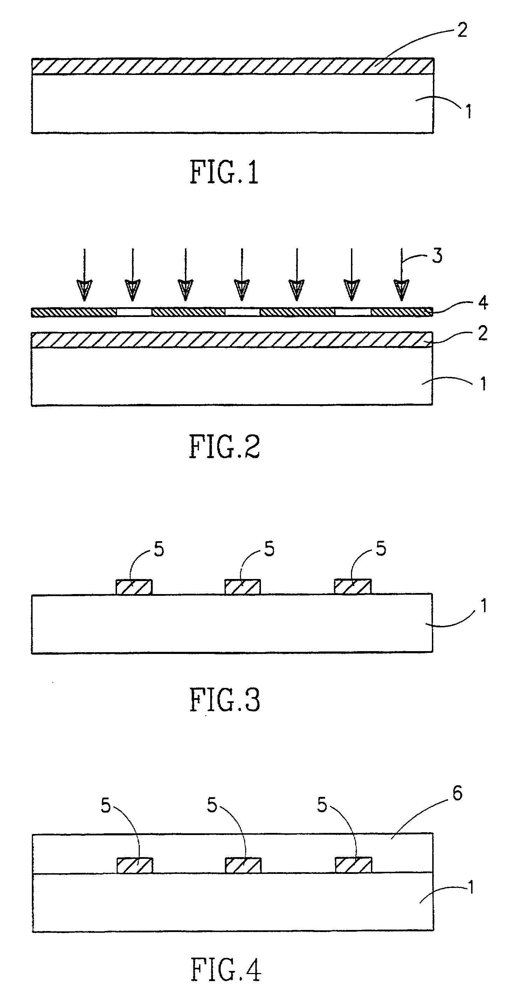

In order to better understand the invention, a preferred embodiment will now be described, by way of non-limiting example only, with reference to the annexed **Figs. 1** to **8** which illustrate sequential steps of the method according to the invention.

### DETAILED DESCRIPTION OF THE INVENTION

Referring to **Fig. 1,** there is shown a polycarbonate or a glass substrate **1** spin-coated with a layer **2** of a homogeneous composition containing a fluorescent material dissolved in a photoresist. Optionally the composition may contain a host material such as an acrylic laquer, and to its application to the substrate it may have included a solvent.

**Figure 2** shows the exposure of the coating layer with a UV light **3** being for example within the range of about 360 nm using a photomask **4** to ensure the desired selective exposure. The exposure doze (incident energy) may for example be within the range of 600 mJ/cm². Optionally, instead of using a photomask, direct imaging may be used.

The exposure is followed by development which removes all exposed parts of layer **2,** and Fig. 3 shows the post development state which in the substrate **1** is bearing an information layer consisting of a plurality of spaced apart data regions **5.**

**Figure 4** shows the positioning of an intermediate, non-fluorescent layer **6** of a photoresist serving for holding together two information layers in spaced relationship as will be explained further below. Optionally the photoresist making up layer **6** is compounded with a host material such as an acrylic lacquer. For application, e.g. by spin-coating, the composition may also comprise a suitable solvent.

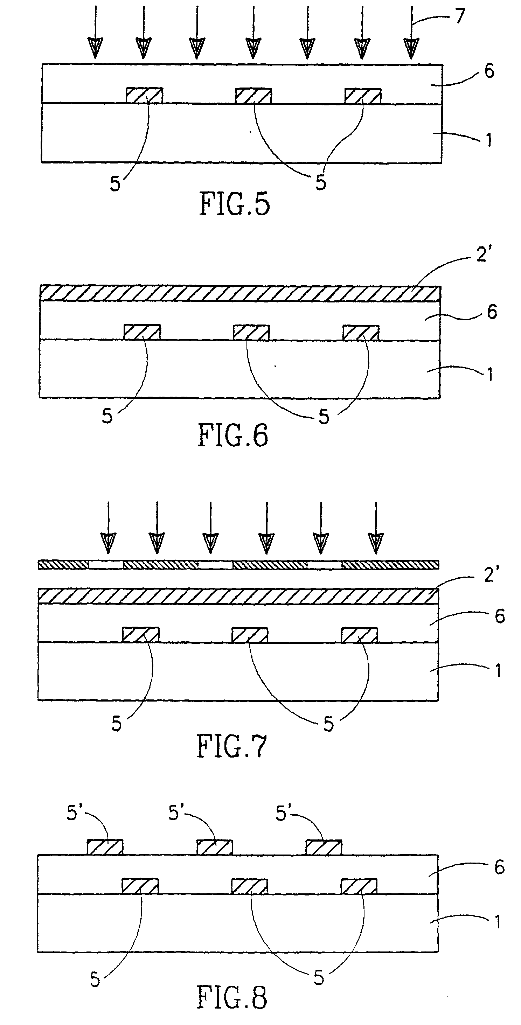

**Figure 5** shows the illumination of the entire surface of the intermediate layer **6**, e.g. with a UV radiation **7** whereby the intermediate layer is cured, the exposure being for example in the range of about 1500 mJ/cm².

**Figure 6** shows the construction of the next working layer and amounts essentially for a repetition of the operation described in figure 1. Thus, a second layer **2'** of a homogeneous composition containing a fluorescent material dissolved in a photoresist is placed on the cured intermediate layer **6,** e. g. by spin-coating. Optionally the composition contains a host material such as an acrylic lacquer, and is dissolved in a solvent for homogeneous coating.

**Figures 7** and **8** show operations similar to those of Figs 2 and 3, leading to a three-dimensional ROM disc with two information layers consisting of data regions **5** and **5'.**

Thus, as described, a ROM disc according to the invention is composed of distinct fluorescent information layers, with data storage capability, held apart by non-fluorescent intermediate layers not having any data storage capability. The fluorescent information layers are thin, their thickness being for example, within the range from about 0.05 µm to about 5 µm, while the intermediate layers are thicker, for example, within the range from about 10 µm to about 600 µm.

Examples of fluorescent materials suitable for the purpose of the present invention are such that absorb within the range of about 500 nm to about 850 nm. Furthermore, these materials should have a high fluorescent quantum efficiency, their absorption spectrum should include the wavelength of the reading laser light and the fluorescent spectrum be within the sensitive range of the detector. The fluorescent materials may, for example, be selected from the following dyes, the designations being according to Lambdachrome Laserdyes of Labda Physics (Labda Physik GMBH & Co. AM Schlehdron 7, Gottingen, DE) carbazine 122, pyridin 1, nile blue, dqoci, rhodamine 6G, rhodamine 800, dci-2, styryl 6, oxazine 750, dtdci, phenoxazon 9, oxazine 1, IR-140, IR-768, IR-780, IR-786, IR-792 oxazine 170, and mixtures thereof.

The host material, when present, interacts with the fluorescent dye to provide an efficient conversion of absorbed radiation into fluorescence. This is due to spatial separation of the fluorescent components preventing interaction of excited and non-excited centers, spectral lines narrowing, increasing of excited states effective life time and transition cross-section enhancement. A particular example for such a host material is an acrylic lacquer. It should be specifically noted that the photoresist material can itself serve as a host material. To this end, for example, PMMAβ may be used.

The amount of the optionally used solvent determines the thickness of the fluorescent layer remaining after drying. The choice of the solvent depends on the solubility of the dye and the photoresist used as well as on the desired viscosity of the photoresist. By way of example, the solvents used are selected from the group consisting of ketones, aldehydes, C₅-C₁₂ alkanes, alcohols, aromatic solvents and mixtures thereof, a preferred solvent being acetone.

The multilayer fluorescent ROM disc according to the invention is composed of thin fluorescent layers separated by relatively thick non-fluorescent layers. These two types of layers contain the same photoresist but differ in that the thick non-fluorescent layer does not contain any fluorescent material. Thus the refractive index of the two layers is identical whereby the optical distortions are minimized. The photoresist material is preferably of the negative type which facilitates the adhesion of pairs of adjacent layers.

The weight ratios between the components of the fluorescent layer depend on the desired concentration of the fluorescent material. The minimum concentration of fluorescent material is determined by the requirement that the absorption coefficient of the fluorescent material be sufficient to produce a registrable fluorescent signal. The maximum concentration is determined by the need to avoid concentration quenching which reduces fluorescence efficiency, and subject to that limitation it may indeed be desired to maximize the concentration of the fluorescent material in the composition used in making the coating layers **2** and **2'** in **Figs. 1** and **6**.

Typically a fluorescent coating may be produced from the following composition:
0.001 - 2 weight % fluorescent dye;
0 - 55 weight % solvent;
0- 55 weight % host material and 25 - 55 weight % photosensitive component.

The excitation is provided using suitable laser light beams, e.g. such as are capable of exciting blue/green (i.e. short wavelength fluorescent material) in high-density discs. Where the use of longer wavelengths is desired, dyes with longer wavelength spectrum should be used.

The invention is further illustrated by the following Example, which is a protocol for the production of a three-dimensional ROM disc.

### EXAMPLE

1. 1.A 120 mm diameter polycarbonate or glass disc is cleaned with an organic solvent.
2. Photoresist ma-N 420 ("Microresist Technology" GmbH) containing dissolved 0.05 weight % of rhodamine 6G is applied to the disc by spinning at 4000 rpm.
3. Coated disc is prebaked at 90°C for 20 min.
4. Exposure with a UV light at 360 nm using a photomask. Exposure doze (incident energy) is 600 mJ/cm².
5. Development with ma-D532 developer during 1.5 min.
6. Rinsing with deionised water.
7. Baking at 120°C for 20 min.
8. Applying the intermediate, non-fluorescent layer, using photoresist ma-490 by spin-coating at 1000 rpm.
9. UV illumination of the entire surface, the dose of the exposure being about 1500 mJ/cm².
10. Repeating steps 2 to 9 once or more, to obtain a multi-layer ROM disc.

## Claims

1. A method of making a three-dimensional read only memory (ROM), having at least two information layers consisting of a plurality spaced-apart data regions capable of generating an output radiation upon excitation by coherent or non-coherent incident exciting radiation, the method comprising a sequence of steps which include:
**(a)** providing a working layer made of a fluorescent composition containing a photosensitive material and a fluorescent material;
**(b)** subjecting said working layer to photolithographic processing to produce said information layer including data regions formed of said fluorescent composition;
**(c)** coating the information layer by a non-fluorescent, intermediate layer; and
**(d)** repeating the sequence steps (a) to (c) a desired number of times to provide a corresponding additional number of information layers with data regions.

2. The method of making a three-dimensional read only memory (ROM) according to Claim 1, wherein in step (a) working layer is carried by a substrate.

3. The method according to Claim 1 or 2, wherein each fluorescent information layer also includes a host material.

4. The method according to any one of Claims 1 to 3, wherein the fluorescent material absorbs within the range of from about 500 run to about 850 nm.

5. The method according to any one of Claims 1 to 4, wherein the photosensitive material is an UV photoresist.

6. The method according to Claim 5, wherein said photoresist is negative photoresist.

7. The method according to any one of Claims 3 to 6, wherein the host material is an acrylic lacquer.

8. The method according to any one of Claims 1 to 7, wherein the thickness of the fluorescent layer is from about 0.05 µm to about 5 µm, and that of the non-fluorescent intermediate layer is from about 2 µm to about 600 µm.

9. A fluorescent composition for use in the performance of the method according to any one of Claims 1 to 8, wherein the fluorescent material is a dye being a member selected from the group consisting of carbazine 122, pyridin 1, nile blue, dqoci, rhodamine 6G, rhodamine 800, dci-2, styryl 6, oxazine 750, dtdci, phenoxazon 9, oxazine 1, IR-140, IR-768, IR-780, IR-786, IR-792 and oxazine 170 and compositions thereof.

10. The fluorescent composition according to Claim 9, comprising a fluorescent material dispersed in a photosensitive material.

11. The method according to any one of Claims 1 to 8, wherein the non-fluorescent, intermediate layer containing the photosensitive material and method further comprising step of illuminating said intermediate non-fluorescent layer to provide adhesion between the information layer and said intermediate layer.

12. The fluorescent composition according to Claim 10, also comprising a member of the group consisting of host materials and solvents.

13. The fluorescent composition according to Claim 12, wherein the solvent is a member selected from the group consisting of ketones, aldehydes, C₅-C₁₂ alkanes, alcohols, aromatic solvents and mixtures thereof.

14. The fluorescent composition according to Claim 12, wherein the solvent is acetone.

## Patentansprüche

1. Verfahren zur Herstellung eines dreidimensionalen Lesespeichers (ROM), der mindestens zwei Informationsschicht aufweist, die aus einer Vielzahl von räumlich getrennten Datenbereichen bestehen und welche die Möglichkeit aufweisen, eine Ausgangsstrahlung auf Anregung durch eine kohärente oder nicht-kohärente einfallende Anregungsstrahlung zu erzeugen, wobei das Verfahren eine Sequenz von Schritten aufweist:
a) bereitstellen einer Arbeitsschicht, welche aus einer fluoreszierenden Zusammensetzung hergestellt wird, die ein photosensibles Material und ein fluoreszierendes Material aufweist;
b) unterwerfen der Arbeitsschicht einer photolithografischen Verarbeitung, um die Informationsschicht zu erzeugen, welche Datenbereiche aufweist, die aus der fluoreszierenden Zusammensetzung hergestellt wurden;
c) beschichten der Informationsschicht mit einer nicht-fluoreszierenden Zwischenschicht; und
d) wiederhohlen der Stufen (a) bis (c) in einer gewünschten Zahl, um eine entsprechende, zusätzliche Zahl von Informationsschichten mit Datenbereichen zur Verfügung zu stellen.

2. Ein Verfahren zur Herstellung eines dreidimensionalen Lesespeichers (ROM) gemäß Anspruch 1, wobei in Schritt (a) die Arbeitsschicht durch ein Substrat getragen wird.

3. Verfahren nach Anspruch 1 oder 2, wobei jede fluoreszierende Informationsschicht ebenfalls ein Grundmaterial aufweist.

4. Verfahren gemäß wenigstens einem der Ansprüche 1 bis 3, wobei das fluoreszierende Material in einem Bereich von ca. 500 nm bis ca. 850 nm absorbiert.

5. Verfahren gemäß wenigstens einem der Ansprüche 1 bis 4, wobei das photosensible Material ein UV-Fotolack (UV-Fotoresist) ist.

6. Verfahren gemäß Anspruch 5, wobei der Fotolack ein negativer Fotolack ist.

7. Verfahren gemäß wenigstens einem der Ansprüche 3 bis 6,. wobei das Grundmaterial ein Acryllack ist.

8. Verfahren gemäß wenigstens einem der Ansprüche 1 bis 7, wobei die fluoreszierenden Schicht zwischen ca. 0,05 µm und ca. 55 µm und die nicht-fluoreszierende Zwischenschicht zwischen ca. 2 µm und ca. 600 µm dick ist.

9. Fluoreszierende Zusammensetzung für den Einsatz in dem Verfahren gemäß wenigstens einem der Ansprüche 1 bis 8, wobei das fluoreszierende Material ein Farbstoff ist, der aus der Gruppe von Carbazin 122, Pyridin 1, Nilblau, DQOCI, Rhodamin 6G, Rhodamin 800, DCI-2, Styryl 6, Oxazin 750, DTDCI, Phenoxazon 9, Oxazin 1, IR-140, IR-768, IR-780, IR-786, IR-792 und Oxazin 170 und Mischungen davon ausgewählt wird.

10. Fluoreszierende Zusammensetzung gemäß Anspruch 9, welche ein fluoreszierendes Material enthält, das in einem photosensiblen Material dispergiert wird.

11. Verfahren gemäß wenigstens einem der Ansprüche 1 bis 8, wobei die nicht-fluoreszierende Zwischenschicht das photosensible Material enthält und das Verfahren den weiteren Schritt zur Beleuchtung der nicht-fluoreszierenden Zwischenlage aufweist, um ein Haften zwischen der Informationsschicht und der Zwischenlage zu ermöglichen.

12. Fluoreszierende Zusammensetzung gemäß Anspruch 10, welche ebenfalls einen Bestandteil aus der Gruppe der Grundmaterialien und Lösungsmittel aufweist.

13. Fluoreszierende Zusammensetzung gemäß Anspruch 12, wobei das Lösungsmittel als Bestandteil der Gruppe von Ketonen, Aldehyden, C₅-C₁₂ Alkanen, Alkohole, aromatische Lösungsmittel und Mischungen davon ausgewählt wird.

14. Fluoreszierende Zusammensetzung gemäß Anspruch 12, wobei das Lösungsmittel Aceton ist.

## Revendications

1. Procédé de fabrication d'une mémoire morte (ROM) tridimensionnelle ayant au moins deux couches d'informations se composant d'une pluralité de zones de données séparées aptes à générer un rayonnement en sortie sur excitation par un rayonnement excitateur incident cohérent ou non cohérent, le procédé comprenant une série d'étapes qui englobent :
(a) la réalisation d'une couche de travail faite d'une composition fluorescente contenant un matériau photosensible et un matériau fluorescent ;
(b) la soumission de ladite couche de travail à un traitement photolithographique pour produire ladite couche d'informations englobant les zones de données formées de ladite composition fluorescente ;
(c) le revêtement de la couche d'informations avec une couche intermédiaire non fluorescente ; et
(d) la répétition des étapes (a) à (c) un nombre de fois désiré pour fournir un nombre supplémentaire correspondant de couches d'informations avec des zones de données.

2. Procédé de fabrication d'une mémoire morte (ROM) tridimensionnelle selon la Revendication 1, dans lequel, à l'étape (a), la couche de travail est supportée par un substrat.

3. Procédé selon la Revendication 1 ou 2, dans lequel chaque couche fluorescente d'informations comprend aussi un matériau hôte.

4. Procédé selon l'une quelconque des Revendications 1 à 3, dans lequel le matériau fluorescent absorbe dans la gamme d'environ 500 nm à environ 850 nm.

5. Procédé selon l'une quelconque des Revendications 1 à 4, dans lequel le matériau photosensible est un photorésist UV.

6. Procédé selon la Revendication 5, dans lequel ledit photorésist est un photorésist négatif.

7. Procédé selon l'une quelconque des Revendications 3 à 6, dans lequel le matériau hôte est un vernis acrylique.

8. Procédé selon l'une quelconque des Revendications 1 à 7, dans lequel l'épaisseur de la couche fluorescente est comprise entre 0,05 µm environ et 5 µm environ, et celle de la couche intermédiaire non fluorescente est comprise entre 2 µm environ et 600 µm environ.

9. Composition fluorescente destinée à une utilisation dans la mise en oeuvre du procédé selon l'une quelconque des Revendications 1 à 8, dans laquelle le matériau fluorescent est un colorant choisi dans le groupe constitué par la carbazine 122, la pyridine 1, le bleu de Nil, le DQOCI, la rhodamine 6G, la rhodamine 800, le DCI-2, le styryl 6, l'oxazine 750, le DTDCI, le phénoxazon 9, l'oxazine 1, l'IR-140, l'IR-768, l'IR-780, l'IR-786, l'IR-792 et l'oxazine 170, et les compositions de ceux-ci.

10. Composition fluorescente selon la Revendication 9, comprenant un matériau fluorescent dispersé dans un matériau photosensible.

11. Procédé selon l'une quelconque des Revendications 1 à 8, dans lequel la couche intermédiaire non fluorescente contient le matériau photosensible et procédé comprenant de plus l'étape d'illumination de ladite couche intermédiaire non fluorescente pour assurer l'adhérence entre la couche d'informations et ladite couche intermédiaire.

12. Composition fluorescente selon la Revendication 10, comprenant aussi un élément du groupe composé des matériaux hôtes et des solvants.

13. Composition fluorescente selon la Revendication 12, dans laquelle le solvant est un élément choisi dans le groupe composé des cétones, des aldéhydes, des alcanes C₅-C₁₂, des alcools, des solvants aromatiques et de leurs mélanges.

14. Composition fluorescente selon la Revendication 12, dans laquelle le solvant est l'acétone.
